**Europäisches Patentamt**

**European Patent Office**

**Office européen des brevets**

(19)

(11) Veröffentlichungsnummer: **0 242 753**
**B1**

(12) **EUROPÄISCHE PATENTSCHRIFT**

(45) Veröffentlichungstag der Patentschrift:
**14.11.90**

(51) Int. Cl.⁵: **B27K 3/52**

(21) Anmeldenummer: **87105417.7**

(22) Anmeldetag: **11.04.87**

(54) **Holzschutzmittel mit Dimethylalkylamin und Borsäure.**

(30) Priorität: **19.04.86 DE 3613254**

(43) Veröffentlichungstag der Anmeldung:
**28.10.87 Patentblatt 87/44**

(45) Bekanntmachung des Hinweises auf die Patenterteilung:
**14.11.90 Patentblatt 90/46**

(84) Benannte Vertragsstaaten:
**AT BE CH DE ES FR GB GR IT LI NL SE**

(56) Entgegenhaltungen:
**WO-A-82/03817**
**DE-A- 3 321 608**
**DE-B- 2 140 051**

(73) Patentinhaber: **Dr. Wolman GmbH,**
**Dr.-Wolman-Strasse 31-33, D-7573 Sinzheim(DE)**

(72) Erfinder: **Goettsche, Reimer, Dr., Waldstrasse 27,**
**D-7570 Baden-Baden 19(DE)**
Erfinder: **Marx, Hans-Norbert, Mozartweg 8,**
**D-7580 Buehl-Weitenung(DE)**

(74) Vertreter: **Schweiss, Werner, Dr. et al, BASF**
**Aktiengesellschaft Patentabteilung**
**Carl-Bosch-Strasse 38, D-6700 Ludwigshafen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft ein Holzschutzmittel, das Borsäure, ein Dimethylalkylamin und ein polares Lösungsmittel enthält.

Es ist bekannt, Mischungen aus einem Metallsalz (z.B. Kupfersalz) mit langkettigen Aminen und Ammoniak als Holzschutzmittel zu verwenden (WO-A-8 203 817). Diese Mischungen haben den Nachteil, daß sie ein Metall enthalten. Demgegenüber sind metallfreie Holzschutzmittel vorzuziehen.

Die Verwendung konzentrierter wasserlöslicher Salze auf Basis wasserlöslicher Amine oder Polyamine und Borsäure als Holzschutzmittel ist bekannt (DE-21 40 051). Die Amine verfärben das Holz beim Tränken mit den wäßrigen Lösungen der Salze; es entsteht eine starke Gelbfärbung. Außerdem reicht die Wirksamkeit dieser Salze bei Witterungsbeanspruchung (Regen) des Holzes nicht aus, da alle Komponente wasserlöslich sind und ausgewaschen werden.

Es hat sich in der Praxis gezeigt, daß sich bei der Herstellung von Konzentraten aus wasserunlöslichen Alkyldimethylaminen ($C_8$-$C_{20}$-Alkyl) und Borsäure zähe, klumpenartige Verbindungen bilden, die sich nur schwer und nach langem Rühren in Wasser lösen.

Es wurde jetzt gefunden, daß die obengenannten Nachteile nicht auftreten bei Mischungen von Borsäure mit Alkyldimethylaminen und polaren Lösungsmitteln und gegebenenfalls Wasser. Ein Alkyldimethylamin ist beispielsweise ein $C_8$-$C_{20}$-Alkyldimethylamin, vorzugsweise ein $C_{10}$-$C_{18}$-Alkyldimethylamin, insbesondere ein $C_{12}$-$C_{16}$-Alkyldimethylamin. Geeignete Verbindungen sind beispielsweise Octyldimethylamin, Decyldimethylamin, Dodecyldimethylamin, Tetradecyldimethylamin, Hexadecyldimethylamin, Octadecyldimethylamin und ihre Mischungen.

Die Mittel können zusätzlich auch noch Emulgatoren, z.B. kationische oder nichtionische Emulgatoren enthalten.

Als kationische Emulgatoren können bevorzugt quartäre Ammoniumverbindungen eingesetzt werden.

Als quartäre Ammoniumverbindungen können hierbei z.B. solche verwendet werden, die der allgemeinen Formel $(R^1R^2R^3R^4N)^+Z^-$ entsprechen, wobei

$R^1$ einen Alkylrest mit 8 bis 20 Kohlenstoffatomen, insbesondere eine Alkylrest mit 12 bis 20 Kohlenstoffatomen, oder einen Benzylrest bedeutet, der gegebenenfalls durch $C_1$-$C_{20}$-Alkyl oder Halogen substituiert ist,

$R^2$ $C_1$-$C_6$-Alkyl, $C_3$-$C_9$-Alkoxyalkyl,

$R^3$ $C_1$-$C_6$-Alkyl, $C_1$-$C_4$-Alkoxy,

$R^4$ $C_1$-$C_{20}$-Alkyl

bedeuten, oder je zwei der Reste, $R^1$ bis $R^4$ zusammen mit dem Stickstoffatom einen heterocyclischen Rest bilden, der 4 bis 5 C-Atome, 1 bis 2 N-Atome und eine, zwei oder drei Doppelbindungen enthält, wobei die Kohlenstoffatome gegebenenfalls durch $C_1$-$C_4$-Alkyl oder Halogen substituiert sind, und Z einen Säurerest z.B. Halogenid, Chlorid und Sulfat bedeutet.

Die erfindungsgemäßen Mittel bilden klare Konzentrate mit einem Gehalt an Borsäure bis zu 40 % (Gew.-%), die sich leicht mit Wasser verdünnen lassen. Die wäßrigen Verdünnungen besitzen einen pH-Wert von 6,5 bis 8,5; vorzugsweise 6,5 bis 7,5. Das Holz wird hierdurch nicht eingefärbt. Die erfindungsgemäßen Mittel können sowohl für handwerkliche Verfahren als auch für großtechnische Verfahren (Doppelvakuum-, Kesseldruck-Verfahren) eingesetzt werden. Überraschenderweise können trotz der hohen Konzentration an Borverbindungen wasserunlösliche Wirkstoffe in diese Mischung eingearbeitet und bei Verdünnung in Wasser emulgiert werden, z.B. 2,5-Dimethylfuran-3-carbonsäure-N-Methoxy-N-Cyclohexylamid, 2-Jodbenzanilid, gamma-Hexachlorcyclohexan. Die bei Verdünnung mit Wasser entstehenden und 1 bis 10 % des Holzschutzmittels (Konzentrat) enthaltenden Emulsionen sind klar und verändern sich auch nach längerem Stehen nicht.

Geeignete Holzschutzmittel (Konzentrate) enthalten beispielsweise (jeweils Gewichtsprozent):

5 - 40 % Borsäure
5 - 40 % Dimethylalkylamin
0 - 50 % Quartäre Ammoniumverbindungen
5 - 40 % polare Lösungsmittel
0 - 40 % nichtionische Emulgatoren, wobei die Summe der Bestandteile, gegebenenfalls mit geringen Mengen Wasser jeweils 100 % beträgt. Die Konzentrate enthalten gegebenenfalls untergeordnete Mengen anderer Amine, Ammoniak, Korrosionsinhibitoren und Wasser, dessen Anteil i.a. gering gehalten werden kann und im wesentlichen der Handhabung dient. Die Erfindung erstreckt sich jedoch gleichermaßen auf die durch Verdünnung mit Wasser herstellbaren Lösungen entsprechend geringerer Einzelkonzentration. Das Verhältnis Borsäure:Dimethylalkylamin wird so gewählt, daß die wäßrige Verdünnung des Konzentrats einen pH-Wert von 6,5 bis 8,5, vorzugsweise 6,5 bis 7,5 hat.

Als geeignete polare organische Lösungsmittel können z.B. wasserlösliche Alkohole (Methanol, Ethanol, Isopropanol), Glykole (Ethylenglykol, 1,2-Propandiol), Glykolether (Diäthylenglykol, Dipropylenglykol, Ethylenglykolmonomethylether, Diethylenglykolmonomethylether), Glykolester (Ethylglykolacetat, Butylglykolacetat), Carbonsäureester (Essigester), Ketone (Aceton), N-Methylpyrrolidon, N-Methylformamid verwendet werden.

2

Ein Teil des Dimethylalkylamins kann ersetzt werden durch andere wasserunlösliche Amine, z.B. Alkylamine (C$_8$-C$_{20}$) oder entsprechende C$_8$-C$_{20}$-Alkyl-1-3-propylendiamine. Auch andere basische fungizide Mittel, wie N-Tridecyl-2,6-dimethylmorpholin, können einen Teil des Dimethylalkylamins ersetzen.

Die Herstellung der Holzschutzmittel erfolgt z.B. indem organisches polares Lösungsmittel, evtl. Wasser, Dimethylalkylamin und gegebenenfalls Emulgator vorgelegt werden und die Borsäure langsam bis zum vollständigen Lösen eingerührt wird.

Beispiel 1

25,00 % Borsäure
25,00 % Dimethylalkylamin (Mischung C$_{12}$-C$_{16}$-Alkyl)
12,50 % Wasser
12,50 % Butylglykolacetat (CH$_3$COOH$_2$CH$_2$CH$_2$OC$_4$H$_9$)
20,00 % Di-decyl-methyl-C$_1$-C$_4$-alkoxy-ammoniumpropionat
5,00 % Ethylenglykol

Beispiel 2

20,00 % Borsäure
20,00 % Dimethylalkylamin (Mischung C$_{12}$-C$_{16}$)
7,50 % N-Tridecyl-2,6-dimethylmorphin
10,00 % Wasser
12,50 % Ethanol
5,00 % Ethylenglykol
25,00 % Di-decyl-methyl-C$_1$-C$_4$-alkoxy-ammoniumpropionat

Beispiel 3

20,00 % Borsäure
20,00 % Dimethylalkylamin (Mischung C$_{12}$-C$_{16}$)
10,00 % Wasser
18,00 % Ethanol
32,00 % Dimethylalkylbenzylammoniumchlorid
(Alkyl: C$_{12}$ 40% C$_{14}$ 50% C$_{16}$ 10%)

Beispiel 4

20,00 % Borsäure
20,00 % Dimethylalkylamin (Mischung C$_{12}$-C$_{16}$)
15,00 % Wasser
15,00 % Ethanol
30,00 % Dimethyldialkylammoniumchlorid (Alkyl: mehr als 90 % C$_{10}$)

Beispiel 5

20,00 % Borsäure
20,00 % Dimethylalkylamin (Mischung C$_{12}$-C$_{16}$)
10,00 % Wasser
10,00 % 1,2-Propylenglykol
5,00 % Ethylenglykol
10,00 % nichtionischer Emulgator auf Ethylenoxid-Basis
10,00 % 2,5-Dimethyl-furan-3-carbonsäure-N-methoxy-N-cyclohexylamid
15,00 % Di-decyl-methyl-C$_1$-C$_4$-alkoxy-ammoniumpropionat

Beispiel 6

20,00 % Borsäure
20,00 % Dimethylalkylamin (Mischung C$_{12}$-C$_{16}$)
10,00 % Wasser
10,00 % 1,2-Propylenglykol
5,00 % Ethylenglykol
15,00 % Di-decyl-methyl-C$_1$-C$_4$-alkoxy-ammoniumpropionat
7,50 % 2,5-Dimethyl-furan-3-carbonsärue-N-methoxy-N-cyclohexylamid
2,50 % gamma-Hexachlorcyclohexan

Beispiel 7

20,00 % Borsäure
20,00 % Dimethylalkylamin (Mischung $C_{12}$-$C_{16}$)
15,00 % Wasser
12,50 % N-Methylpyrrolidon
5,00 % Ethylenglykol
2,50 % 2-Jodbenzoesäureanilid
15,00 % Di-decyl-methyl-$C_1$-$C_4$-alkoxy-ammoniumpropionat

Die Grenzwerte der Wirksamkeit gegen holzzerstörende Basidiomyceten (Coniophora puteana, Poria vaporaria) nach Auswaschung impränierten Holzes für die Beispiele (1 bis 7) liegen bei weniger als 6 kg Holzschutzmittel je $m^3$.

**Patentansprüche**

1. Holzschutzmittel auf der Basis einer Mischung von Borsäure mit Aminen, <u>dadurch gekennzeichnet</u>, daß das Horzschutzmittel als Amin ein Alkyldimethylamin und zusätzlich ein polares organisches Lösungsmittel enthält.

2. Holzschutzmittel nach Anspruch 1, <u>dadurch gekennzeichnet</u>, daß es ein Dimethyl-$C_8$-$C_{20}$-alkylamin enthält.

3. Holzschutzmittel nach Anspruch 1, <u>dadurch gekennzeichnet</u>, daß es zusätzlich einen Emulgator enthält.

4. Holzschutzmittel nach Anspruch 3, <u>dadurch gekennzeichnet</u>, daß als Emulgator eine quartäre Ammoniumverbindung verwendet wird.

5. Verfahren zum Schutz von Holz, <u>dadurch gekennzeichnet</u>, daß man das Holz mit einer wäßrigen Lösung eines Holzschutzmittels gemäß einem der Ansprüche 1 bis 4 behandelt.

**Claims**

1. A wood preservative based on a mixture of boric acid with an amine, wherein the wood preservative contains an alkyldimethylamine as the amine and additionally contains a polar organic solvent.

2. A wood preservative as claimed in claim 1, which contains a dimethyl-$C_8$-$C_{20}$-alkylamine.

3. A wood preservative as claimed in claim 1, which additionally contains an emulsifier.

4. A wood preservative as claimed in claim 3, wherein the emulsifier used is a quaternary ammonium compound.

5. A method for preserving wood, wherein the wood is treated with an aqueous solution of a wood preservative as claimed in any of claims 1 to 4.

**Revendications**

1. Agent de protection du bois à base d'un mélange d'acide borique et d'amines, caractérisé par le fait que l'agent de protection du bois contient, comme amine, une alkyldiméthylamine et additionnellement un solvant organique polaire.

2. Agent de protection du bois selon la revendication 1, caractérisé par le fait qu'il contient un diméthyl-alkyle en $C_8$-$C_{20}$-amine.

3. Agent de protection du bois caractérisé par le fait qu'il contient additionnellement un émulsifiant.

4. Agent de protection du bois caractérisé par le fait qu'est utilisé comme émulsifiant, un composé d'ammonium quaternaire.

5. Procédé de protection du bois, caractérisé par le fait qu'on traite le bois avec une solution aqueuse d'un agent de protection du bois selon l'une des revendications 1 à 4.